(19) Europäisches Patentamt
European Patent Office
Office européen des brevets

(11) **EP 3 465 947 B1**

(12) **FASCICULE DE BREVET EUROPEEN**

(45) Date de publication et mention
de la délivrance du brevet:
**18.03.2020 Bulletin 2020/12**

(21) Numéro de dépôt: **17731825.0**

(22) Date de dépôt: **02.06.2017**

(51) Int Cl.:
***H04B 10/116*** *(2013.01)*

(86) Numéro de dépôt international:
**PCT/EP2017/063582**

(87) Numéro de publication internationale:
**WO 2017/207812 (07.12.2017 Gazette 2017/49)**

(54) **PROCEDE DE RECEPTION D'UN SIGNAL LUMINEUX MODULE DE TYPE SIGNAL LI-FI**

VERFAHREN ZUM EMPFANG EINES LI-FI-MODULIERTEN LICHTSIGNALS

METHOD OF RECEIVING A LI-FI MODULATED LIGHT SIGNAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.06.2016 FR 1655094**

(43) Date de publication de la demande:
**10.04.2019 Bulletin 2019/15**

(73) Titulaire: **Oledcomm**
**78140 Velizy Villacoublay (FR)**

(72) Inventeurs:
• **TOPSU, Suat**
**78000 Versailles (FR)**
• **PEREZ OLIVAS, Huetzin**
**78000 Versailles (FR)**
• **MORALES, René Michel**
**Celaya 38060 (MX)**

• **GARCIA-MARQUEZ, Jorge**
**78180 Montigny Le Bretonneux (FR)**

(74) Mandataire: **Lavaud, Thomas et al**
**Cabinet Boettcher**
**16, rue Médéric**
**75017 Paris (FR)**

(56) Documents cités:
**US-A1- 2014 003 823    US-A1- 2016 028 478**

• **LUO PENGFEI ET AL: "Undersampled phase shift
ON-OFF keying for camera communication",
2014 SIXTH INTERNATIONAL CONFERENCE ON
WIRELESS COMMUNICATIONS AND SIGNAL
PROCESSING (WCSP), IEEE, 23 octobre 2014
(2014-10-23), pages 1-6, XP032710660, DOI:
10.1109/WCSP.2014.6992043**

## Description

L'invention concerne le domaine de la réception de signaux lumineux modulés de type signaux Li-Fi.

### ARRIERE PLAN DE L'INVENTION

Aujourd'hui, une immense majorité des appareils électroniques communiquant via une communication sans fil utilise, pour mettre en œuvre cette communication sans fil, le domaine des ondes radioélectriques du spectre électromagnétique.

L'utilisation quasi exclusive du domaine des ondes radioélectriques pose un certain nombre de problèmes bien connus.

Parmi ces problèmes, on trouve notamment des problèmes de saturation. Le nombre d'usagers des communications sans fil dans le domaine des ondes radioélectriques augmente de manière spectaculaire alors que l'étendue du domaine des ondes radioélectriques est limitée, ce qui tend à perturber les communications de ces usagers qui connaissent des ralentissements ou des difficultés de connexion. Par ailleurs, on note fréquemment que, dans certains espaces intérieurs très fréquentés (par exemple, dans des grandes surfaces, des gares ou des salons d'exposition), la communication sans fil de type Wi-Fi (pour *Wireless Fidelity*) est difficile à utiliser à cause du grand nombre d'utilisateurs par borne émettrice, mais aussi parce que le nombre élevé de surfaces réfléchissantes des ondes radioélectriques produit de fortes interférences.

Parmi ces problèmes, on trouve aussi des problèmes de santé. Certaines ondes radioélectriques utilisées dans les communications sans fil ont une fréquence proche de la fréquence de résonance de la molécule d'eau, et ont été de ce fait identifiées comme étant un facteur de risque pour certaines maladies.

L'utilisation de la technologie Li-Fi (pour « Light Fidelity ») permet d'éviter les problèmes qui viennent d'être évoqués.

Grâce au développement de diodes électroluminescentes (LED) présentant des capacités de commutation très importantes et de photodiodes présentant des temps de réponse très élevés, on peut transmettre et recevoir avec le Li-Fi des données avec un débit nettement plus important que le débit offert par exemple par la technologie WiFi.

La technologie Li-Fi est ainsi parfaitement adaptée pour transmettre et recevoir de la musique, des vidéos, des données internet, des données de mesure (température, luminosité, etc.), des alarmes (incendie, présence de vapeurs toxiques, etc.), pour connecter en réseau des capteurs ou d'autres types d'appareils, pour géolocaliser en intérieur un appareil en exploitant des signaux Li-Fi émis par des lampes à LED, etc.

Or, de nombreux appareils électroniques récents (par exemple, des téléphones mobiles de type *smartphone,* ou bien des tablettes) sont munis d'un capteur de lumière ambiante. Il semble donc particulièrement intéressant d'utiliser ce capteur de lumière ambiante pour permettre à un appareil électronique de recevoir un signal lumineux de type Li-Fi. Cependant, la fréquence d'échantillonnage des capteurs de lumière ambiante équipant les appareils électroniques récents est relativement basse, ce qui, en application du théorème de Nyquist-Shannon, limite fortement la fréquence maximale présente dans le signal lumineux de type Li-Fi et utilisée pour coder les données transmises.

Le document US 2014/003823 A1 décrit un procédé de réception d'un signal lumineux modulé de type signal Li-Fi de l'art antérieur.

### OBJET DE L'INVENTION

L'invention a pour but de recevoir efficacement un signal lumineux modulé de type signal Li-Fi avec un capteur de lumière ambiante présentant une fréquence d'échantillonnage relativement faible.

### RESUME DE L'INVENTION

En vue de la réalisation de ce but, on propose un procédé de réception d'un signal lumineux modulé de type signal Li-Fi comprenant des trames comportant chacune un bit de départ correspondant à une fréquence de départ et des bits de donnée correspondant à des fréquences de donnée, le procédé de réception comprenant les étapes de :

- acquérir le signal lumineux modulé et générer un signal temporel échantillonné ;
- identifier le bit de départ et les bits de donnée de chaque trame en comparant des intensités d'échantillons du signal temporel échantillonné avec un seuil d'intensité prédéterminé ;
- associer au bit de départ un vecteur de départ contenant des paramètres calculés à partir d'intensités d'échantillons du bit de départ et à chaque bit de donnée un vecteur de donnée contenant des paramètres calculés à partir d'intensités d'échantillons du bit de donnée ;
- évaluer une proximité entre le vecteur de départ et un premier vecteur de référence contenant des paramètres de référence représentatifs d'un bit de départ, et entre le vecteur de départ et un deuxième vecteur de référence contenant des paramètres de référence représentatifs d'un bit de donnée ;
- confirmer l'identification du bit de départ lorsque le vecteur de départ est plus proche du premier vecteur de référence que du deuxième vecteur de référence.

Le procédé de l'invention permet, même si le signal lumineux modulé de type signal Li-Fi est échantillonné avec une fréquence d'échantillonnage relativement faible, de détecter de manière fiable le bit de départ des trames, et donc de reconstituer efficacement les trames du signal lumineux modulé de type signal Li-Fi.

On propose aussi un appareil électronique de type téléphone mobile comprenant un capteur de lumière ambiante et dans lequel est mis en œuvre le procédé de réception qui vient d'être présenté, l'acquisition du signal lumineux modulé étant réalisée par le capteur de lumière ambiante de l'appareil électronique.

D'autres caractéristiques et avantages de l'invention ressortiront à la lecture de la description qui suit d'un mode de mise en œuvre particulier non limitatif de l'invention.

BREVE DESCRIPTION DES DESSINS

L'invention sera mieux comprise à la lumière de la description qui suit en référence aux dessins annexés parmi lesquels :

- la figure 1 représente une lampe à LED utilisée pour émettre un signal lumineux modulé de type signal Li-Fi et un téléphone mobile qui met en œuvre le procédé de réception selon l'invention ;
- la figure 2 représente une trame du signal lumineux modulé ;
- la figure 3 représente un signal temporel échantillonné produit à partir du signal lumineux modulé acquis par le téléphone mobile ;
- la figure 4 représente le signal temporel échantillonné après filtrage ;
- la figure 5 représente une enveloppe du signal temporel échantillonné ;
- la figure 6 représente une première classe centrée sur un premier vecteur de référence et une deuxième classe centrée sur un deuxième vecteur de référence ;
- la figure 7 représente des portions du signal temporel échantillonné correspondant chacune à un bit de donnée ;
- la figure 8 représente des signaux fréquentiels correspondant chacun à une portion du signal temporel échantillonné ;
- la figure 9 représente une étape d'apprentissage mise en œuvre dans le procédé de réception selon l'invention.

DESCRIPTION DETAILLEE DE L'INVENTION

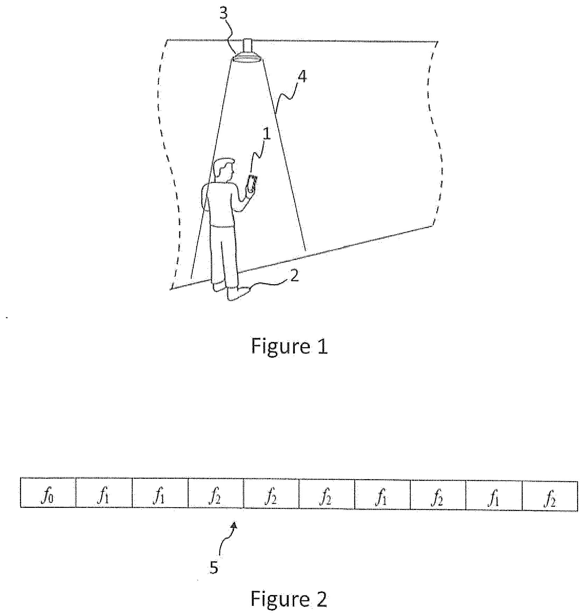

En référence à la figure 1, le procédé de réception d'un signal lumineux modulé de type signal Li-Fi selon l'invention est ici mis en œuvre dans un téléphone mobile 1 en possession d'un utilisateur 2 qui se trouve à proximité d'une lampe à LED 3 fixée au plafond d'une pièce. Le téléphone mobile 1 est un téléphone mobile de type smartphone.

La lampe à LED 3 est bien sûr utilisée pour éclairer la pièce en produisant de la lumière, ladite lumière étant essentiellement concentrée dans un cône lumineux 4 (selon des considérations d'optique géométrique).

La lampe à LED 3 est aussi utilisée pour émettre des signaux Li-Fi à destination d'appareils électroniques se trouvant dans le cône lumineux 4 ou à proximité du cône lumineux 4, tels que le téléphone mobile 1.

Les signaux Li-Fi émis par la lampe à LED 3 permettent de transmettre un certain nombre de données, parmi lesquelles un identifiant de la lampe à LED 3 (par exemple, un identifiant de type adresse MAC, pour Media Access Control) et des données de position de la lampe à LED 3. Ainsi, lorsque le téléphone mobile 1 reçoit l'identifiant, une communication s'établit entre le téléphone mobile 1 et la lampe à LED 3. Les données de position de la lampe à LED 3 permettent notamment au téléphone mobile 1 de déterminer sa propre position.

Les données transmises par la lampe à LED 3 sont contenues dans des trames qui présentent ici chacune un bit de départ et neuf bits de donnée.

Chacun des neuf bits de donnée est égal à « 0 » ou à « 1 ».

La transmission de chaque bit de la trame consiste à commuter une ou plusieurs LEDs de la lampe à LED 3 à une fréquence associée au bit en question, pendant une durée associée au bit en question.

Ainsi, le bit de départ est associé à une fréquence de départ $f_0$ égale ici à $f_0$=198Hz, qui est transmise pendant une certaine durée de transmission.

Chaque bit de donnée égal à 0 est associé à une première fréquence de donnée $f_1$ égale ici à $f_1$=208Hz, et chaque bit de donnée égal à 1 est associé à une deuxième fréquence de donnée $f_2$ égale ici à $f_2$=213Hz. Pour chaque bit de donnée, la première fréquence de donnée $f_1$ ou la deuxième fréquence de donnée $f_2$ est transmise pendant une durée de transmission égale à la moitié de la durée de transmission de la fréquence de départ $f_0$.

Entre chaque bit de départ ou de donnée à l'intérieur d'une trame, la ou les LEDs sont commandées pour émettre un signal transitoire d'intensité maximale pendant une durée transitoire.

Ainsi, sur la figure 2, le bit de départ de la trame 5 correspond à la fréquence de départ $f_0$, les bits de donnée égaux à 0 correspondent à la première fréquence de donnée $f_1$ et les bits de donnée égaux à 1 correspondent à la deuxième fréquence de donnée $f_2$.

Le procédé de détection selon l'invention est donc utilisé pour permettre au téléphone mobile 1 de recevoir et de reconstituer les trames contenues dans le signal Li-Fi.

La mise en œuvre du procédé de détection utilise un capteur de lumière ambiante du téléphone mobile 1 (ou ALS, pour Ambient Light Sensor) et des moyens de traitement du téléphone mobile 1 (qui comprennent notamment un composant de traitement de type microcontrôleur, FPGA, DSP, etc.).

Le capteur de lumière ambiante du téléphone mobile 1 acquiert le signal Li-Fi, numérise le signal Li-Fi et génère un signal temporel échantillonné. Le signal temporel échantillonné est alors traité par les moyens de traitement du téléphone mobile 1 pour reconstituer les trames contenues dans le signal Li-Fi.

Le capteur de lumière ambiante (tout comme, d'ailleurs, les moyens de traitement) n'est ni dédié ni conçu pour la mise en œuvre de la réception d'un signal Li-Fi. Il présente ainsi une fréquence d'échantillonnage très faible par rapport aux fréquences d'échantillonnage classiquement utilisées pour recevoir des données. La fréquence d'échantillonnage du capteur de lumière est réglable, et est ici réglée pour être égale à 100Hz. On constate donc que cette fréquence d'échantillonnage est nettement inférieure au double de la fréquence maximale contenue dans le signal Li-Fi.

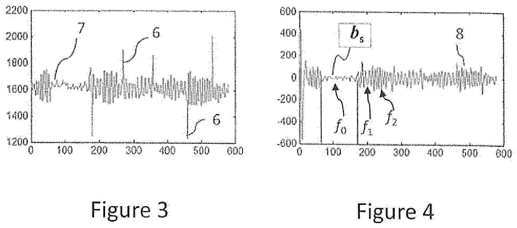

Ainsi, en référence à la figure 3, le signal temporel échantillonné 7 subit un effet de repli de spectre. Le signal temporel échantillonné 7 est dégradé du fait de modulations par des harmoniques de la fréquence de départ $f_0$, de la première fréquence de donnée $f_1$ et de la deuxième fréquence de donnée $f_2$. Des pics parasites 6 apparaissent dans le signal temporel échantillonné 7.

Le procédé de détection selon l'invention consiste tout d'abord à filtrer le signal temporel échantillonné 6 pour obtenir un signal temporel échantillonné filtré 8, visible sur la figure 4, débarrassé des pics parasites 6.

On distingue sur le signal temporel échantillonné filtré 8 le bit de départ $b_s$ de fréquence de départ $f_0$, un bit de donnée égal à 0 correspondant à la première fréquence de donnée $f_1$ et un bit de donnée égal à 1 correspondant à la deuxième fréquence de donnée $f_2$.

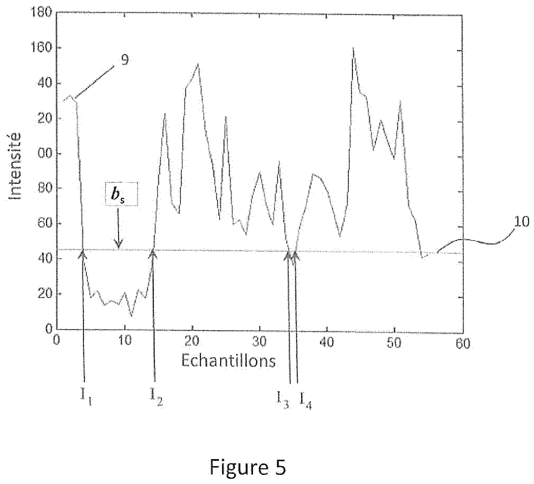

En référence à la figure 5, une détection d'enveloppe est ensuite réalisée sur le signal temporel échantillonné filtré 8, pour obtenir une enveloppe 9 du signal temporel échantillonné 7.

Le bit de départ $b_s$ et les bits de donnée sont alors identifiés en comparant des intensités d'échantillons de l'enveloppe 9 du signal temporel échantillonné 7 (et donc du signal temporel échantillonné lui-même) avec un seuil d'intensité prédéterminé. Le seuil d'intensité prédéterminé est ici égal à une moyenne 10 des intensités des échantillons du signal temporel échantillonné 7.

Le bit de départ $b_s$ est identifié à partir de la détection d'un nombre élevé d'échantillons successifs de l'enveloppe 9 du signal temporel échantillonné 7 présentant une intensité inférieure à la moyenne 10, le nombre élevé étant supérieur ou égal à un seuil d'échantillons prédéterminé. Ainsi, on voit sur la figure 5 que la distance entre l'intersection $I_1$ et l'intersection $I_2$ de l'enveloppe 9 du signal temporel échantillonné 7 avec la moyenne 10 est nettement plus importante que, par exemple, la distance entre l'intersection $I_3$ et l'intersection $I_4$, ce qui correspond à un nombre élevé d'échantillons successifs de l'enveloppe 9 du signal temporel échantillonné 7 présentant une intensité inférieure à la moyenne 10.

Comme la durée du bit de départ est connue, tout comme la durée de chaque bit de donnée, il est possible, suite à la détection du bit de départ, de segmenter le signal temporel échantillonné 7 pour reproduire la trame transmise.

On obtient donc, outre le bit de départ, neuf portions du signal temporel échantillonné 7 correspondant chacune à un bit de donnée. On note qu'à ce stade, on n'est pas encore en mesure de distinguer si un bit de donnée est égal à 0 ou à 1.

On perçoit sur la figure 5 que la moyenne des intensités des échantillons du bit de départ $b_s$, l'écart type des intensités des échantillons du bit de départ $b_s$ et la moyenne des différences d'intensité entre deux échantillons successifs du bit de départ $b_s$ sont relativement faibles par rapport aux paramètres équivalents des bits de donnée.

On utilise ces paramètres pour déterminer si chaque bit acquis est un bit de départ ou un bit de donnée.

On forme à partir de chaque bit acquis un vecteur x comportant trois composantes : la moyenne des intensités des échantillons du bit acquis, l'écart type des intensités des échantillons du bit acquis et la moyenne des différences d'intensité entre deux échantillons successifs du bit de acquis.

Puis, on évalue une proximité entre le vecteur x et un vecteur de référence de départ $v_s$, et une proximité entre le vecteur x et un vecteur de référence de donnée $v_d$. On détermine ainsi si le vecteur x est associé à un bit de départ (on dit alors que le vecteur x est un vecteur de départ) ou si le vecteur x est associé à un bit de donnée (on dit alors que le vecteur x est un vecteur de donnée). Chaque vecteur x est stocké dans une table d'entraînement en mémoire du téléphone mobile 1.

Le vecteur de référence de départ $v_s$ et le vecteur de référence de donnée $v_d$ sont obtenus au cours d'une étape d'initialisation, dans laquelle des mesures de l'intensité lumineuse en différentes orientations et à différentes distances par rapport à la lampe 3 sont réalisées par le capteur de lumière ambiante du téléphone mobile 1. Le vecteur de référence de départ $v_s$ et le vecteur de référence de donnée $v_d$ sont stockés dans la table d'entraînement, et sont ensuite mis à jour en temps réel à partir de chaque vecteur x.

Le vecteur de référence de départ $v_s$ comporte trois composantes : une moyenne d'intensités représentative d'un bit de départ, un écart type d'intensités représentatif d'un bit de départ, et une moyenne de différences d'intensité entre deux échantillons successifs représentative d'un bit de départ.

Le vecteur de référence de donnée $v_d$ comporte trois composantes : une moyenne d'intensités représentative d'un bit de donnée, un écart type d'intensités représentatif d'un bit de donnée, et une moyenne de différences d'intensité entre deux échantillons successifs représentative d'un bit de donnée.

Deux autres vecteurs sont par ailleurs produits et stockés au cours de l'étape d'initialisation : le vecteur $W^T$ et le vecteur $W_0$, avec $W = v_s - v_d$ et $W_0 = -1/2(v_s^T v_s - v_d^T v_d)$.

A chaque acquisition d'un vecteur x, la proximité entre le vecteur x et le vecteur de référence de départ

$v_s$, et la proximité entre le vecteur x et le vecteur de référence de donnée $v_d$, sont évaluées en utilisant la fonction de proximité $P(x)=W^T x+W_0$.

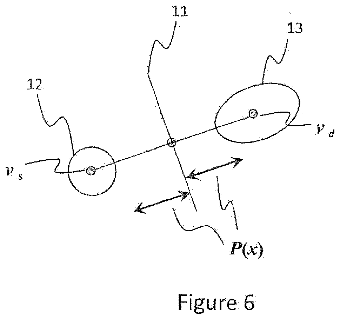

En effet, en référence à la figure 6, en considérant que les composantes des vecteurs $v_s$ et $v_d$ forment des coordonnées dans un espace à trois dimensions (tout comme pour le vecteur x), l'ensemble des vecteurs de départ est regroupé dans une première classe 12 dont la moyenne devient la référence pour le bit de départ, et l'ensemble des vecteurs de donnée est regroupé dans une deuxième classe 13 dont la moyenne devient la référence des bits de données. La première classe 12 présente ici la forme d'une sphère centrée sur le vecteur de référence de départ $v_s$, alors que la deuxième classe 13 présente ici la forme d'une ellipsoïde centrée sur le vecteur de référence de donnée $v_d$.

La frontière entre la première classe 12 et la deuxième classe 13 est la médiatrice 11 du segment [$v_s$ $v_d$].

Si la fonction de proximité est négative, c'est à dire si $P(x)<0$, alors x est un vecteur de départ. Si la fonction de proximité est positive, c'est à dire que $P(x)>0$, alors x est un vecteur de donnée.

On confirme donc que le bit de départ identifié est bien un bit de départ, et donc que les bits de donnée identifiés sont bien des bits de donnée.

Les bits de donnée sont ensuite décodés pour déterminer, pour chaque bit de donnée, s'il correspond à un bit de donnée ayant une valeur binaire égale à zéro ou bien à un bit de donnée ayant une valeur binaire égale à 1.

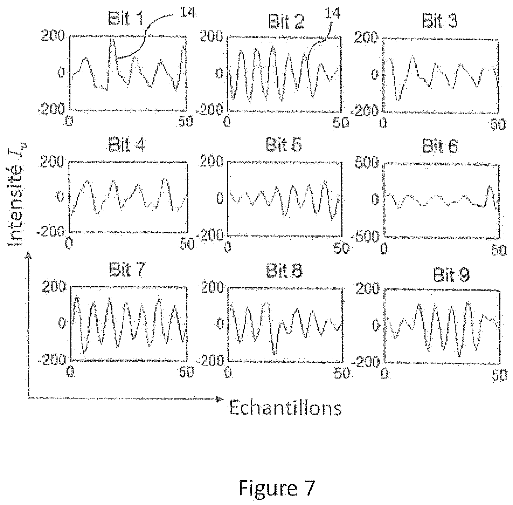

Les neuf portions 14 du signal temporel échantillonné 7 correspondant aux neuf bits de données sont représentées sur la figure 7. Chaque portion 14 comporte ici 50 échantillons.

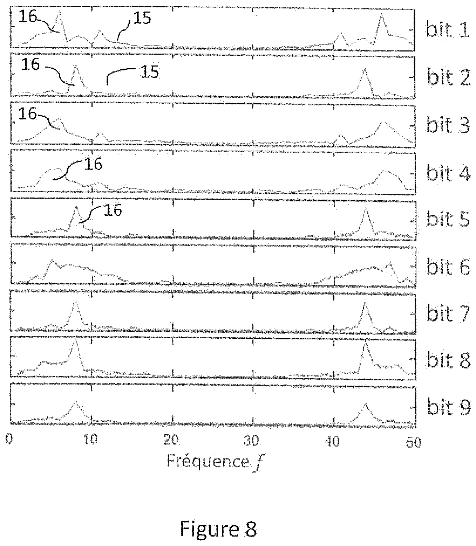

Le décodage consiste à appliquer une transformée de Fourier à chaque portion 14 du signal temporel échantillonné 7. On obtient ainsi, en référence à la figure 8, neuf signaux fréquentiels 15, correspondant chacun à l'une des neuf portions 14 du signal temporel échantillonné 7.

Pour chaque signal fréquentiel 15, la détermination de la composante fréquentielle principale 16 permet de définir si un bit de donnée est associé à la première fréquence de donnée $f_1$ (et donc est égal à 0) ou à la deuxième fréquence de donnée $f_2$ (et donc est égal à 1). Bien sûr, à cause de l'effet de repli de spectre, la composante fréquentielle principale 16 n'est pas exactement égale à la première fréquence de donnée $f_1$ ou à la deuxième fréquence de donnée $f_2$, mais les composantes fréquentielles principales 16 entre un bit de donnée égal à 0 et un bit de donnée égal à 1 sont suffisamment distinctes pour pouvoir aisément déterminer si un bit de donnée est associé à la première fréquence de donnée $f_1$ ou à la deuxième fréquence de donnée $f_2$.

Ainsi, le premier bit de donnée bit1, le troisième bit de donnée bit3, le quatrième bit de donnée bit4 et le sixième bit de donnée bit6 présentent une composante fréquentielle principale 16 basse qui correspond à la première fréquence de donnée $f_1$ (et donc à un bit de donnée égal à 0), alors que le deuxième bit de donnée bit2, le cinquième bit de donnée bit5, le septième bit de donnée bit7, le huitième bit de donnée bit8 et le neuvième bit de donnée bit9 présentent une composante fréquentielle principale 16 haute qui correspond à la deuxième fréquence de donnée $f_2$ (et donc à un bit de donnée égal à 1).

Les trames comprises dans le signal Li-Fi sont ainsi recomposées par le téléphone mobile 1, et les données contenues dans les trames peuvent être utilisées par le téléphone mobile 1.

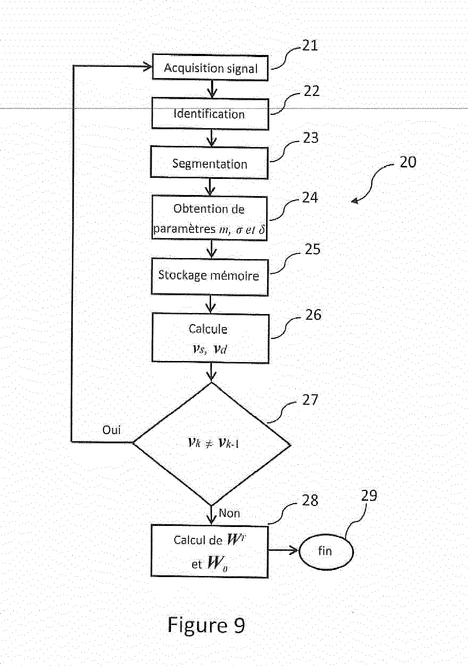

Avantageusement et en référence à la figure 9, le procédé de détection met en œuvre une étape d'apprentissage 20 pour définir le vecteur de référence de départ $v_s$, le vecteur de référence de donnée $v_d$ et les vecteurs $W^T$ et $W_0$ qui sont utilisés pour estimer la fonction de proximité $P(x)$.

Comme on l'a vu plus tôt, le vecteur de référence de départ $v_s$ contient des paramètres de référence représentatifs d'un bit de départ, et le vecteur de référence de donnée $v_d$ contient des paramètres de référence représentatifs d'un bit de donnée.

Les paramètres de référence peuvent bien sûr être des paramètres constants prédéfinis. Dans le cadre de la mise en œuvre de l'étape d'apprentissage 20, cependant, les paramètres de référence ne sont pas constants mais sont définis à partir des signaux Li-Fi émis par la lampe à LED 3 et reçus par le téléphone mobile 1, le téléphone mobile 1 étant en mouvement pour changer la position de réception du signal et considérer ainsi une diversité d'angles, positions et hauteurs de réception par rapport à la lampe 3.

Les paramètres de référence sont ici égaux aux moyennes de l'ensemble des composantes des vecteurs de départ (pour le vecteur de référence de départ $v_s$), et aux moyennes de l'ensemble des composantes des vecteurs de donnée (pour le vecteur de référence de donnée $v_d$).

Ainsi, le vecteur de référence de départ est égal à :

$$v_s = \left(\sum v_{sn}\right)/n,$$

où les $v_{sn}$ sont les n vecteurs de départ qui ont été stockés dans la table d'entraînement (chaque vecteur de départ $v_{sn}$ correspondant à un bit de départ acquis).

De même, le vecteur de référence de donnée est égal à :

$$v_d = \left(\sum v_{dm}\right)/m,$$

où les $v_{dm}$ sont les m vecteurs de donnée qui ont été stockés dans la table d'entraînement (chaque vecteur de donnée correspondant à un bit de donnée acquis).

Ainsi, suite à chaque nouvelle acquisition d'une trame d'un signal Li-Fi (étape 21 sur la figure 9), à l'identification du bit de départ (étape 22) et à la segmentation du signal temporel échantillonné 7 (étape 23), les paramètres du vecteur de départ $v_{sk}$ du bit de départ et les paramètres du vecteurs de donnée $v_{dk}$ sont obtenus (étape 24) et stockés dans la table d'entraînement (étape 25).

La prise en compte d'une nouvelle série de paramètres du vecteur de départ $v_{sk}$ et d'une nouvelle série de paramètres du vecteur de données $v_{dk}$, pour calculer respectivement le vecteur de référence de départ $v_s$ et vecteur de référence de donnée $v_d$ (étape 26), va modifier le vecteur de référence de départ $v_s$ et le vecteur de référence de donnée $v_d$, jusqu'à ce que le vecteur de référence de départ $v_s$ et le vecteur de référence de donnée $v_d$ atteignent une valeur stable.

On évalue donc l'impact de la prise en compte du vecteur de départ $v_{sk}$ et des vecteurs de donnée $v_{dk}$ sur le calcul du vecteur de référence de départ $v_s$ et du vecteur de référence de départ $v_d$ (étape 27).

Si le calcul du vecteur de référence de départ $v_s$ et du vecteur de référence de donnée $v_d$, suite à la prise en compte du vecteur de départ $v_{sk}$ et des vecteurs de donnée $v_{dk}$, modifie de manière importante le vecteur de référence de départ $v_s$ et le vecteur de référence de donnée $v_d$ par rapport au vecteur de référence de départ $v_s$ et au vecteur de référence de donnée $v_d$ obtenus avec $v_{sk-1}$ et $v_{dk-1}$, l'étape d'apprentissage 20 est réinitialisée et reprend par l'acquisition d'un nouveau signal (étape 21).

Par contre, si le vecteur de référence de départ $v_s$ et le vecteur de référence de donnée $v_d$ ne sont que très peu modifiés, on considère que le vecteur de référence de départ $v_s$ et le vecteur de référence de donnée $v_d$ sont stabilisés.

Les vecteurs $W^T$ et $W_0$ peuvent alors être calculés (étape 28). L'étape d'apprentissage prend fin (étape 29).

Bien sûr, tant que le vecteur de référence de départ $v_s$ et le vecteur de référence de donnée $v_d$ ne sont pas stabilisés, l'identification des bits de départ est réalisée en utilisant uniquement la comparaison des intensités d'échantillons du signal temporel échantillonné avec le seuil d'intensité prédéterminé.

L'invention n'est pas limitée au mode de réalisation particulier qui vient d'être décrit, mais, bien au contraire, couvre toute variante entrant dans le cadre de l'invention tel que définie par les revendications.

Le procédé de détection selon l'invention peut bien sûr être mis en œuvre avec un appareil électronique autre qu'un téléphone mobile et comportant un capteur de lumière : tablette, ordinateur portable, montre connectée (ou autre objet connecté), etc.

Le type de trames reçues peut bien sûr être différent de celui présenté ici (les fréquences ou le format des bits peuvent par exemple être différents).

On note par ailleurs que les vecteurs de départ et les vecteurs de donnée pourraient parfaitement comprendre seulement certains des paramètres cités (moyenne, écart type, moyenne des différences), ou bien d'autres paramètres.

**Revendications**

1. Procédé de réception d'un signal lumineux modulé de type signal Li-Fi comprenant des trames comportant chacune un bit de départ ($b_s$) correspondant à une fréquence de départ ($f_0$) et des bits de donnée correspondant à des fréquences de donnée ($f_1$, $f_2$), le procédé de réception comprenant les étapes de :

   - acquérir le signal lumineux modulé et générer un signal temporel échantillonné (7) ;
   - identifier le bit de départ et les bits de donnée de chaque trame en comparant des intensités d'échantillons du signal temporel échantillonné avec un seuil d'intensité prédéterminé (10) ;

   le procédé de réception étant **caractérisé en ce qu'**il comporte en outre les étapes de :

   - associer au bit de départ un vecteur de départ contenant des paramètres calculés à partir d'intensités d'échantillons du bit de départ, et à chaque bit de donnée un vecteur de donnée contenant des paramètres calculés à partir d'intensités d'échantillons du bit de donnée ;
   - évaluer une proximité entre le vecteur de départ et un vecteur de référence de départ ($v_s$) contenant des paramètres de référence représentatifs d'un bit de départ, et entre le vecteur de départ et un vecteur de référence de donnée ($v_d$) contenant des paramètres de référence représentatifs d'un bit de donnée ;
   - confirmer l'identification du bit de départ lorsque le vecteur de départ est plus proche du vecteur de référence de départ que du vecteur de référence de donnée.

2. Procédé de réception selon la revendication 1, dans lequel le signal temporel échantillonné est échantillonné à une fréquence d'échantillonnage inférieure au double d'une fréquence maximale du signal lumineux modulé de type signal Li-Fi.

3. Procédé de réception selon la revendication 1, dans lequel le bit de départ est identifié à partir de la détection d'un nombre élevé d'échantillons successifs d'une enveloppe (9) du signal temporel échantillonné présentant une intensité inférieure au seuil d'intensité prédéterminé, le nombre élevé étant supérieur ou égal à un seuil d'échantillons prédéterminé.

4. Procédé de réception selon la revendication 1, dans lequel le seuil d'intensité prédéterminé est égal à une moyenne ($m_s$) des intensités des échantillons du signal temporel échantillonné.

5. Procédé de réception selon la revendication 1, dans lequel chaque fréquence de donnée est supérieure à la fréquence de départ, et dans lequel une durée du bit de départ est supérieure à une durée de chaque bit de donnée.

6. Procédé de réception selon la revendication 1, dans lequel les paramètres calculés comportent une moyenne des intensités des échantillons et/ou un écart type des intensités des échantillons et/ou une moyenne des différences d'intensité entre deux échantillons successifs.

7. Procédé de réception selon la revendication 1, comportant en outre une étape d'apprentissage (20) consistant à définir le vecteur de référence de départ ($v_s$) et le vecteur de référence de donnée ($v_d$) à partir des vecteurs de départ des bit de départ reçus et à partir des vecteurs de donnée des bit de donnée reçus.

8. Procédé de réception selon la revendication 1, dans lequel les paramètres de référence sont des moyennes des paramètres calculés.

9. Procédé de réception selon la revendication 1, dans lequel la proximité est évaluée à partir d'une fonction de proximité $P(x)=W^Tx+W_0$, le vecteur W étant tel que $W=v_s-v_d$ et le vecteur $W_0$ étant tel que $W_0=-1/2(v_s^Tv_s-v_d^Tv_d)$, le vecteur x étant soit un vecteur de départ soit un vecteur de donnée, $v_s$ étant le vecteur de référence de départ et $v_d$ étant le vecteur de référence de donnée.

10. Procédé de réception selon la revendication 9, dans lequel le vecteur $W^T$ et le vecteur $W_0$ sont stockés après avoir été calculés, et dans lequel le vecteur x est calculé en temps réel.

11. Procédé de réception selon la revendication 1, comportant les étapes, suite à l'identification du bit de départ :

- de segmenter le signal temporel échantillonné pour obtenir des bits de données ;
- de déterminer la fréquence de chaque bit de donnée ;
- d'attribuer une valeur binaire à chaque bit de donnée ;
- de recomposer les trames du signal lumineux modulé de type signal Li-Fi.

12. Procédé de réception selon la revendication 1, dans lequel les bits de données comprennent des données de géolocalisation.

13. Appareil électronique de type téléphone mobile, comprenant des moyens configurés pour mettre en œuvre le procédé de réception selon l'une des revendications précédentes, lesdits moyens comportant un capteur de lumière ambiante, l'acquisition du signal lumineux modulé étant réalisée par ledit capteur de lumière ambiante.

**Patentansprüche**

1. Verfahren zum Empfangen eines modulierten Lichtsignals vom Typ Li-Fi-Signal, umfassend Rahmen, die jeweils ein Startbit ($b_s$) umfassen, das einer Startfrequenz ($f_0$) entspricht, und Datenbits, die Datenfrequenzen ($f_1$, $f_2$) entsprechen, wobei das Verfahren zum Empfangen die Schritte umfasst:

- Erfassen des modulierten Lichtsignals und Erzeugen eines abgetasteten Zeitsignals (7);
- Identifizieren des Startbits und der Datenbits jedes Rahmens, indem die Abtastintensitäten des abgetasteten Zeitsignals mit einem vorbestimmten Intensitätsschwellenwert (10) verglichen werden;

wobei das Verfahren zum Empfangen **dadurch gekennzeichnet ist, dass** es ferner die Schritte umfasst:

- Verknüpfen eines Startvektors mit dem Startbit, wobei der Startvektor Parameter enthält, die anhand von Abtastintensitäten des Startbits berechnet werden, und eines Datenvektors mit jedem Datenbit, wobei der Datenvektor Parameter enthält, die anhand von Abtastintensitäten des Datenbits berechnet werden;
- Schätzen einer Nähe zwischen dem Startvektor und einem Referenzstartvektor ($v_s$), der Referenzparameter enthält, die repräsentativ für ein Startbit sind, und zwischen dem Startvektor und einem Referenzdatenvektor ($v_d$), der Referenzparameter enthält, die repräsentativ für ein Datenbit sind;
- Bestätigen der Identifizierung des Startbits, wenn der Startvektor näher am Referenzstartvektor ist als der Referenzdatenvektor.

2. Verfahren zum Empfangen nach Anspruch 1, bei dem das abgetastete Zeitsignal mit einer Abtastfrequenz abgetastet wird, die kleiner als die doppelte maximale Frequenz des modulierten Lichtsignals vom Typ Li-Fi-Signal ist.

3. Verfahren zum Empfangen nach Anspruch 1, bei dem das Startbit anhand der Erfassung einer hohen Zahl von aufeinanderfolgenden Abtastungen einer Einhüllenden (9) des abgetasteten Zeitsignals identifiziert wird, das eine Intensität aufweist, die kleiner als ein vorbestimmter Intensitätsschwellenwert ist, wobei die hohe Zahl größer oder gleich einem vorbestimmten Abtastschwellenwert ist.

4. Verfahren zum Empfangen nach Anspruch 1, bei dem der vorbestimmte Intensitätsschwellenwert gleich einem Mittelwert ($m_s$) der Intensitäten der Abtastungen des abgetasteten Zeitsignals ist.

5. Verfahren zum Empfangen nach Anspruch 1, bei dem jede Datenfrequenz größer als die Startfrequenz ist, und bei dem eine Dauer des Startbits größer als eine Dauer jedes Datenbits ist.

6. Verfahren zum Empfangen nach Anspruch 1, bei dem die berechneten Parameter einen Mittelwert der Intensitäten der Abtastungen und/oder eine Standardabweichung der Intensitäten der Abtastungen und/oder einen Mittelwert der Intensitätsunterschiede zwischen zwei aufeinanderfolgenden Abtastungen umfassen.

7. Verfahren zum Empfangen nach Anspruch 1, ferner umfassend einen Schritt (20) des Lernens, der darin besteht, den Referenzstartvektor ($v_s$) und den Referenzdatenvektor ($v_d$) anhand der Startvektoren der empfangenen Startbits und anhand der Datenvektoren der empfangenen Datenbits zu definieren.

8. Verfahren zum Empfangen nach Anspruch 1, bei dem die Referenzparameter Mittelwerte der berechneten Parameter sind.

9. Verfahren zum Empfangen nach Anspruch 1, bei dem die Nähe anhand einer Näherungsfunktion $P(x)= W^T x+W_0$ geschätzt wird, wobei der Vektor W derart ist, dass $W=v_s-v_d$ und der Vektor $W_0$ derart ist, dass $W_0= -1/2(v_s{}^T v_s-v_d{}^T v_d)$, wobei der Vektor x entweder ein Startvektor oder ein Datenvektor ist, wobei $v_s$ der Referenzstartvektor und $v_d$ der Referenzdatenvektor ist.

10. Verfahren zum Empfangen nach Anspruch 9, bei dem der Vektor $W^T$ und der Vektor $W_0$ nach der Berechnung gespeichert werden und bei dem der Vektor x in Echtzeit berechnet wird.

11. Verfahren zum Empfangen nach Anspruch 1, umfassend nach der Identifizierung des Startbits die Schritte:

- Segmentieren des abgetasteten Zeitsignals, um Datenbits zu erhalten;
- Bestimmen der Frequenz jedes Datenbits;
- Zuordnen eines binären Werts zu jedem Datenbit;
- Zusammensetzen der Rahmen des modulierten Lichtsignals vom Typ Li-Fi-Signal.

12. Verfahren zum Empfangen nach Anspruch 1, bei dem die Datenbits Geolokalisierungsdaten umfassen.

13. Elektronisches Gerät der Art Mobiltelefon, umfassend Mittel, die ausgebildet sind, um das Verfahren zum Empfangen nach einem der vorhergehenden Ansprüche durchzuführen, wobei die genannten Mittel einen Umgebungslichtsensor umfassen, wobei die Erfassung des modulierten Lichtsignals durch den genannten Umgebungslichtsensor erfolgt.

**Claims**

1. Method of receiving a modulated light signal of the Li-Fi signal type comprising frames each comprising a start bit ($b_s$) corresponding to a start frequency ($f_0$) and data bits corresponding to data frequencies ($f_1$, $f_2$), the reception method comprising the steps of:

- acquiring the modulated light signal and generating a sampled time signal (7);
- identifying the start bit and the data bits of each frame by comparing intensities of samples of the sampled time signal with a predetermined intensity threshold (10);

the reception method being **characterised in that** it further comprises the steps of:

- associating with the start bit a start vector containing parameters calculated based on intensities of samples of the data bit, and associating with each data bit a data vector containing parameters calculated based on intensities of samples of the data bit;
- evaluating a proximity between the start vector and a reference start vector ($v_s$) containing reference parameters representative of a start bit, and between the start vector and a reference data vector ($v_d$) containing reference parameters representative of a data bit;
- confirming the identification of the start bit when the start vector is closer to the reference start vector than to the reference data vector.

2. Reception method according to claim 1, wherein the sampled time signal is sampled at a sampling frequency of less than twice a maximum frequency of the modulated light signal of the Li-Fi signal type.

3. Reception method according to claim 1, wherein the start bit is identified based on the detection of a large number of successive samples of an envelope (9) of the sampled time signal having an intensity lower than the predetermined intensity threshold, the large number being greater than or equal to a predetermined sample threshold.

4. Reception method according to claim 1, wherein the predetermined intensity threshold is equal to a mean ($m_s$) of the intensities of the samples of the sampled time signal.

5. Reception method according to claim 1, wherein each data frequency is greater than the start frequency, and wherein a duration of the start bit is greater than a duration of each data bit.

6. Reception method according to claim 1, wherein the calculated parameters contain a mean of the intensities of the samples and/or a standard deviation of the intensities of the samples and/or a mean of the differences in intensity between two successive samples.

7. Reception method according to claim 1, further comprising a learning step (20) consisting of defining the reference start vector ($v_s$) and the reference data vector ($v_d$) based on the start vectors of the start bits received and based on the data vectors of the data bits received.

8. Reception method according to claim 1, wherein the reference parameters are means of the calculated parameters.

9. Reception method according to claim 1, wherein the proximity is evaluated based on a proximity function $P(x)=W^T x+W_0$, the vector W being such that $W=v_s-v_d$ and the vector $W_0$ being such that $W_0=-1/2(v_s^T v_s-v_d^T v_d)$, the vector x being either a start vector or a data vector, $v_s$ being the reference start vector and $v_d$ being the reference data vector.

10. Reception method according to claim 9, wherein the vector $W^T$ and the vector Wo are stored after being calculated, and wherein the vector x is calculated in real time.

11. Reception method according to claim 1, comprising the following steps after identification of the start bit:

   - segmenting the sampled time signal in order to obtain data bits;
   - determining the frequency of each data bit;
   - attributing a binary value to each data bit;
   - recomposing the frames of the modulated light signal of the Li-Fi signal type.

12. Reception method according to claim 1, wherein the data bits comprise geolocation data.

13. Mobile telephone-type electronic device, comprising means configured to implement the reception method according to any of the preceding claims, said means comprising an ambient light sensor, the modulated light signal being acquired by means of said ambient light sensor.

Figure 1

| $f_0$ | $f_1$ | $f_1$ | $f_2$ | $f_2$ | $f_2$ | $f_1$ | $f_2$ | $f_1$ | $f_2$ |
|-------|-------|-------|-------|-------|-------|-------|-------|-------|-------|

Figure 2

Figure 3

Figure 4

Figure 5

Figure 6

Figure 7

Figure 8

Figure 9

**RÉFÉRENCES CITÉES DANS LA DESCRIPTION**

**Documents brevets cités dans la description**

- US 2014003823 A1